**Europäisches Patentamt**

**European Patent Office**

**Office européen des brevets**

(11) Publication number: **0 139 441**
**A2**

## (12) EUROPEAN PATENT APPLICATION

(21) Application number: **84306076.5**

(22) Date of filing: **05.09.84**

(51) Int. Cl.⁴: **G 01 N 23/04**

(30) Priority: **20.09.83 GB 8325117**

(43) Date of publication of application:
**02.05.85 Bulletin 85/18**

(84) Designated Contracting States:
**BE DE FR IT NL**

(71) Applicant: **British Gas Corporation**
**Rivermill House 152 Grosvenor Road**
**London SW1V 3JL(GB)**

(72) Inventor: **Robinson, Arthur Graham**
**43 Labre Crescent**
**Whickham Newcastle-upon-Tyne(GB)**

(72) Inventor: **Bennett, Alan**
**181 Chadderton Drive Chapel House Estate**
**Newcastle-upon-Tyne(GB)**

(54) **Real time radiographic inspection.**

(57) Real time X-ray examination of objects is attained using a low light level high resolution camera, such as a Silicon Intensified Target Camera, to detect fluorescence from a scintillator. The video output signal from the camera is digitised before re-display or video storage of the image.

EP 0 139 441 A2

Croydon Printing Company Ltd.

This invention relates to real-time radiographic inspection techniques.

Methods for inspecting occluded objects are well known, for example X-ray apparatus for the inspection of baggage. X-rays passing through an object are absorbed to a greater or lesser extent depending upon the nature and density of the object. The radiation transmitted through the object impinges upon a receiver/converter wherein the energy is converted into a form for visual display. The receiver/converter may be for example a scintillator wherein the X-radiation is converted into visible light and which is coupled to a photodiode system. The signal produced is then handled along the lines conventionally employed for TV systems.

Such systems have use for the empirical analysis of occluded objects but they are not sufficiently accurate or sensitive enough for "Non-destructive testing" (NDT) analytical techniques such as the examination of welds.

We have suprisingly found coupled radiographic/optical systems can be employed giving satisfactory resolution.

These advantages can be realised by using fluoroscopic screens as the scintillator and by detecting the image using low light level high resolution cameras.

Thus the present invention provides apparatus for the examination of occluded objects, said apparatus including means for generating and directing a beam of X-rays along a path, towards a fluoroscopic scintillator, means for locating the object under examination within the beam path, optical means for detecting the fluoroscopic photometric emission from the scintillator, means for processing said emission and means for displaying said processed emission in a readable manner.

The scintillator may be a fluoroscopic screen and is preferably employed in association with cameras adapted for low light level high resolution. Such cameras would include Silicon Intensified Target (SIT) cameras, commercially available examples of which include the 40mm dia. SIT Camera and the 16mm dia. I SIT camera which is similar to the 40mm SIT camera except that a single stage image intensifier in front of the target and 40mm demagnifying lens system.

Suitable fluoroscopic screen scintillators for use with these SIT cameras include the commercially available fluorometallic intensifier (Kyokko) type screen consisting of polycrystalline calcium tungstate coated onto thin lead foil.

Although the fluorescence produces a 'noisy' output video signal from the camera we have found that the signal can processed by digitising into a 512x512x8 bit resolution matrix.

The digitised image may be further processed by functions such as contrast stretching, averaging and integration before re-display. The image processing is conducted in real-time although the image may be stored on video tape and has a quality equal to that of conventional photographic film images.


An example of the equipment used to proces the SIT video output is the Microconsultants Intellect 100 system.

0139441

<u>CLAIM</u>

1. Apparatus for the examination of occluded objects, said apparatus including means for generating and directing a beam of X-rays along a path, fluoroscopic scintillator means located in the path, means for locating the object in the path between the generator and the scintillator, optical means for detecting fluoroscopic emission from the scintillator, means for processing said detected emission thereby to display send emission in a readable manner.

2. Apparatus is claimed in claim 1 wherein said optical means is a Silicon Intensified Target camera.

3. Apparatus as claimed in claim 1 or claim 2 wherein said fluoroscopic scintillator is a fluorometallic intensifier screen.